# EUROPEAN PATENT SPECIFICATION

(11) **EP 4 569 155 B1**
(45) Date of publication and mention of the grant of the patent: **27.05.2026**
(21) Application number: 23755069.4
(22) Date of filing: 10.08.2023
(51) Int. Cl.: C22B 7/00, C21B 3/04, C22B 3/00, C22B 19/30, C23F 1/30, C23F 1/44, C23F 1/46

(54) **PROCESS FOR DE-ZINCING OF GALVANIZED STEEL SCRAP**
VERFAHREN ZUM ENTZINKEN VON VERZINKTEM STAHLSCHROTT
PROCÉDÉ DE DÉZINGAGE DE DÉCHETS D'ACIER GALVANISÉ

(30) Priority: 10.08.2022 EP 22189694
(43) Date of publication of application: 18.06.2025
(73) Proprietor: Xtract GmbH, 78467 Konstanz (DE)
(72) Inventor: AUER, Gerhard, 47800 Krefeld (DE)
(74) Representative: Hoffmann Eitle
(86) International application number: PCT/EP2023/072177
(87) International publication number: WO 2024/033477

(56) References cited:
- GB-A- 2 334 969
- US-A1- 2015 259 766
- GATOS HARRY C.: "Acceleration of the Dissolution of Iron in Sulfuric Acid by Ferric Ions", JOURNAL OF THE ELECTROCHEMICAL SOCIETY JOURNAL OF THE ELECTROCHEMICAL SOCIETY, 31 May 1956 (1956-05-31), pages 286 - 291, XP093019983, Retrieved from the Internet <URL:https://iopscience.iop.org/article/10.1149/1.2430312/pdf> [retrieved on 20230201]
- ZUNKEL A D: "ELECTRIC ARC FURNACE DUST MANAGEMENT: A REVIEW OF TECHNOLOGIES", AISE STEEL TECHNOLOGY, AISE, PITTSBURG, PA, US, vol. 74, no. 3, 1 March 1997 (1997-03-01), pages 33 - 38, XP000689855, ISSN: 0021-1559
- RAZA NADEEM ET AL: "Beneficiation of zinc from electric arc furnace dust using hydrometallurgical approach", RUSSIAN JOURNAL OF APPLIED CHEMISTRY, PLEIADES PUBLISHING, MOSCOW, vol. 89, no. 5, 12 August 2016 (2016-08-12), pages 836 - 845, XP036028559, ISSN: 1070-4272, [retrieved on 20160812], DOI: 10.1134/S1070427216050244

## Description

### Background

Galvanization is the process of coating steel with a thin zinc layer for improved corrosion resistance. The Zn coating is a thin layer of metallic zinc that may also include some dopants, e.g. Al, Sn, Ni, Co, Fe. Galvanization can be performed by electrolytic deposition (electrogalvanization) or by dipping the steel body into a liquid of molten zinc. Since galvanization generally improves the steel properties, for example with respect to corrosion resistance, galvanized steel, with a zinc layer making up 3 to up to 40 kg per ton of steel, is a common industrial product.

Generally, the term galvanized steel or galvanized steel scrap as used herein is to be understood in a broad sense: Galvanized steel or galvanized steel scrap includes any sheets or substrates of steel that are covered by a zinc layer. The zinc layer may be applied by galvanic or electrolytic deposition, or the zinc layer may be applied by hot dipping of the steel substrate into molten zinc, or by zinc vapor deposition or by any other method of coating a steel substrate with a zinc layer.

Additionally, the term galvanized steel or galvanized steel scrap as used herein includes any material resulting from a subsequent treatment, e.g., a subsequent annealing of the zinc coated steel substrate for better adhesion or performance of the zinc layer.

However, for the recycling of steel, the Zn coating is undesired because the Zn coating evaporates at higher temperatures resulting in significant amounts of Zn in the flue gas. Scrap comprising Zn coating (galvanized steel scrap or galvanized scrap) has thus a lower value compared to Zn-free scrap, and there exist many attempts in the art to de-zinc the galvanized steel scrap.

There are different options for depletion of Zn from the galvanized steel scrap:
- Pyrometallurgical
- Hydrometallurgical with alkaline leaching
- Hydrometallurgical with acidic leaching

While the performance of acidic leaching is generally better than the one of alkaline leaching, it entails a significant disadvantage, namely that the acidic solution not only leaches Zn, but also Fe. Consequently, the resulting material is not suitable for electrowinning (pure) Zn metal, unless an additional separation step to purify Zn is done. Such an additional separation step is required even if means for minimizing Fe leaching are implemented, e.g. by monitoring the electric potential by placing a reference electrode in the leach solution, measuring the corrosion potential and stopping the reaction when the measured potential arrives at a plateau, as taught in US2015/0259766.

Consequently, acidic de-zincing of galvanized steel scrap for electrowinning of metallic zinc is considered to be economically unfavorable in the art (see, for example, DEZINCING OF GALVANIZED STEEL by J. Grogan, Colorado Scholl of Mines: https://pdfcoffee.com/qdownload/dezincinc-of-galvanized-steel-pdf-pdf-free.html, p. 75, lines 15-16).

WO 2023/089234 relates to a process for recovering zinc and iron products from zinc-containing waste materials.

### Summary of the invention

In view of this prior art, the present invention addresses the need to provide an efficient and economic process for recycling Zn-coated Fe such as galvanized steel scrap.

The inventor found that the use of an acidic solution comprising Fe³⁺ for leaching combines technical and economic advantages in a way which, surprisingly, overcomes the previously known drawbacks of acidic leaching: Fe³⁺ is not only an oxidation agent resulting in an acceleration of Zn leaching, but also generates Fe²⁺ in the leaching step from an otherwise useless waste material, making the separation step suitable for the production of Fe²⁺ salt and thus industrially feasible.

The present invention is defined in the appended claims and provides a process for depleting metallic Zn from Zn-coated Fe (such as zinc-coated scrap or galvanized steel scrap, respectively), comprising the following steps:
a) Subjecting the Zn-coated Fe to a leaching step in an acidic solution comprising Fe³⁺ to provide an acidic solution containing Zn²⁺ and Fe²⁺, wherein during leaching there is an excess of Fe³⁺ with respect to metallic Zn with an atomic ratio Fe³⁺ /Zn⁰ >2 and/or wherein the acidic solution comprises Fe³⁺ in a concentration of 1.5 to 60 g Fe³⁺ per kg of solution at the initiation of the leaching step;
b) Obtaining a metallic Fe substrate depleted from zinc; and
c) Separating Fe²⁺ from Zn²⁺ to provide a Zn²⁺-containing product and a Fe²⁺ salt.

The acidic solution either contains Fe³⁺ in a concentration of 1.5 to 60 g Fe³⁺ per kg of solution at the initiation of the leaching step. Such an acidic solution may for example be obtained from treatment of materials comprising ferric Fe with acid. In a preferred embodiment, the acidic solution used in step a) is obtained by subjecting electric arc furnace dust (EAFD) to an acid treatment.

Alternatively or additionally, during leaching there is an excess of Fe³⁺ with respect to metallic Zn with an atomic ratio Fe³⁺/Zn⁰ >2.

Step c) provides two different products, a Zn²⁺-containing product and a Fe²⁺-salt.

The Zn²⁺-containing product obtained in step c) is ZnS obtained from precipitation and is used after conversion into ZnSO₄ to producing metallic Zn by electrowinning. Alternatively, the Zn²⁺-containing product is a ZnSO₄ or ZnCl₂ solution that is obtained by solvent extraction. The Fe²⁺ salt is preferably FeCl₂ or FeSO₄, which, after optional purification, can be sold for wastewater treatment, as chromate reducing agent for cement or as animal food additive.

### Brief description of the figure

Figure 1 provides a bar chart depicting residual Zn on a steel surface as obtained in Example 4.
Figure 2 provides a bar chart depicting residual Zn on a steel surface as obtained in Example 5.

### Detailed description

### The acidic solution and the leaching step

The acidic solution can be obtained by reacting waste products with fresh or waste acids and is thus preferably a waste-derived solution. The waste products or waste acids may be any waste H₂SO₄ (or spent H₂SO₄ or thin H₂SO₄), e.g. from TiO₂ production using the sulfate process, waste acidic solutions from manufacturing of zinc, any waste HCl, steel pickling solutions comprising FeCl₂ or FeSO₄, waste metal chlorides from TiO₂ chlorination of TiO₂ manufacturing using the chloride process, iron chloride solutions from production of synthetic rutile, or any waste acids comprising Fe³⁺, or waste acids used for dissolving of Fe oxides or hydroxides, or combinations of the waste products listed above. The pH of the acidic solution is preferably 1.5 or lower.

Preferably the following industrial residues comprising Fe can be dissolved in or leached with acids:
- EAFD (typically 20-50% Fe; 10-40% Zn)
- EAFD from stainless steel production (comprising Cr and Ni)
- Slags from lead industry
- Jarosite or Goethite as waste from zinc industry; Jarosite = MFe₃(OH)₆(SO₄)₂ with M = Na, K or NH₄
- Millscale (preferably after elimination of adherent oil)
- Dusts from cupola furnaces
- Stainless steel production dust
- Blast furnace dust and sludge (typically 30-40% Fe; 1-8% Zn)
- Basic oxygen furnace (BOF) dust and sludge (up to 70% Fe; <5% Zn)
- Spent H₂S absorbers comprising EAFD, or ZnO as absorbent

Also, the following industrial residues comprising Zn can be dissolved in or leached with acids, given Fe is adjoined into the acidic solution by using acids comprising Fe or by combination with one of the residues listed above:
- Zinc ash
- Zinc skimmings
- Brass ash

Jarosite is obtained in primary zinc manufacturing by precipitation at 95°C and pH 3.5. As Jarosite mainly is landfilled any use of Jarosite generates additional value due to avoiding landfilling cost. Same applies for Goethite that is obtained as waste in primary zinc manufacturing. For properties and hydrometallurgic treatment of Jarosite see WO 2018/109283.

A further option is leaching of Fe oxides or compositions comprising Fe oxides and/or metallic Fe. It is also possible to using spent acid comprising Fe²⁺ and/or Fe3+ as leaching agent. Any of these options can be combined resulting in a high degree of freedom for choosing the best scenario from technical, economical and logistic point of view.

Preferably the acidic solution comprising Fe³⁺ is based on H₂SO₄ or HCl. Depending on waste materials used the acid base can be selected accordingly. For example, recycling steel pickling solutions comprising FeCl₂ should prefer a HCl based matrix. Solutions comprising FeSO₄ should prefer a H₂SO₄ based matrix. If there is free choice, e.g., when dissolving EAFD in acid, the sulfate-based matrix is most preferred, as the FeSO₄ * 7 H₂O crystals take a significant amount of water out of the system.

Preferably the acidic solution used in the process of the present invention comprises 1.5 - 60 g, preferably 4 - 50 g, more preferably 10- 40 g, and most preferably 14 to 28 g Fe³⁺ per kg of solution. Determination of Fe³⁺ is made by analyzing total dissolved Fe by ICP and Fe²⁺ by titration with permanganate; with Fe³⁺ being the difference between total dissolved Fe and Fe²⁺.

Preferably the acidic solution used in the process of the present invention comprises Zn²⁺ obtained from leaching industrial waste materials comprising Zn (see above) with acids, most preferably H₂SO₄. Most preferably, the acidic solution is prepared by leaching of electric arc furnace dust (EAFD) with sulfuric acid (World of Metallurgy - ERZMETALL 75 (2022) No.1, 28-35).

Preferably the reaction of EAFD with sulfuric acid is made using sulfuric acid of >90% H2SO4.

In a preferred embodiment EAFD and sulfuric acid are fed simultaneously into a mixing area and then are displaced from the mixing area. Thus, the reaction of EAFD and sulfuric acid can be performed in a continuous process. For example, EAFD and sulfuric acid are fed simultaneously into a screw reactor and are conveyed inside the screw reactor to the opposite end. Preferably the screw reactor is double walled and can be heated or cooled, depending on the residence time in the reactor and the amount of heat generated by the reaction. Thus, the temperature of the mixture can be maintained for a longer period at temperatures >200°C.

Preferably the acidic solution comprising Fe³⁺ has more than 25%, more preferably more than 50%, most preferably more than 75% of Fe in oxidation state Fe³⁺.

A preferred embodiment of the invention is
- leaching a Zn containing waste material, preferably EAFD, with H₂SO₄
- separating undissolved material and obtaining an acidic solution comprising H⁺, Zn²⁺, and Fe³⁺
- using the acidic solution for depletion of zinc from galvanized steel scrap or a composition comprising galvanized steel scrap
- obtaining scrap depleted from zinc and a solution comprising ZnSO₄ and FeSO₄
- separating Fe²⁺ from Zn²⁺ to provide a Zn²⁺-containing product and a Fe²⁺ salt.

Dissolving EAFD in H₂SO₄ can be done in a single step reaction with concentrated H₂SO₄ or in two-step dissolution with diluted H₂SO₄ in step 1 and concentrated H₂SO₄ in step 2. The diluted H₂SO₄ can be any waste H₂SO₄, or the solution obtained after crystallization and separation of FeSO₄ * 7 H₂O according to the inventive process. The acidic solution resulting from EAFD dissolving comprises H⁺, Fe³⁺, and Zn²⁺, and can comprise Fe²⁺.

After reaction of the waste material with acid the dissolution in water or diluted acid can be done using reducing agents. Preferably, metallic Zn or Fe from scrap or H₂ generated during Zn leaching can be used.

In state of the art acidic leaching Zn is oxidized by H⁺, which is known to lead to kinetic problems due to overpotential associated with H₂ generation. In contrast, according to the present invention, Fe³⁺ is an oxidation agent for metallic Zn. This avoids or at least reduces the kinetic problems with overpotential for H₂ generation and thus can result in an accelerated Zn leaching. Moreover, H₂ generation can be reduced or even avoided completely, and the reducing power of Zn is not useless but is highly valuable for reduction of Fe³⁺ instead of H₂ being blown off.

Preferably there are more than 1 leaching step (with at least 1 leaching step being done with a stoichiometric excess of metallic Zn in relation to Fe³⁺, and at least 1 leaching step being done with a stoichiometric excess of H⁺ and Fe³⁺ in relation to metallic Zn). For the leaching step with stoichiometric excess of metallic Zn in relation to Fe³⁺ the concentration of H₂SO₄ preferably is <10%, most preferably <4%. Thus, it is possible to obtain steel scrap with <0.5%, preferably, < 0.2%, most preferably < 0.1% of residual Zn and a solution free from Fe3+ with <2%, preferably <1.5%, most preferably <1% of H₂SO₄. Any H₂SO₄ concentration herein means free H₂SO₄.

Subject of the disclosure is also Zn-coated Fe (or galvanized steel) that is covered by an acidic solution comprising 1.5 - 60 g, preferably 4 - 50 g, most preferably 10- 40 g Fe³⁺ per kg of solution.

Preferably, the acidic solution comprising Fe³⁺ is used in an amount so that there is temporarily an excess of Fe³⁺ with respect to metallic Zn provided as coating. Preferably, this excess is present at the beginning of the process. However, it could also be present at the end of the leaching step. More preferably, the atomic ratio Fe³⁺/Zn⁰ is > 2, even more preferably >4, most preferably >10. Resulting from this some metallic Fe may be consumed for reduction of Fe³⁺.

This allows a more thorough leaching for better Zn removal. If scrap is in the form of pressed packages, some surface area coated with Zn is not directly accessible for leaching agents. Consequently, a certain degree of "overleaching" can help approaching (close to) 100% Zn depletion; "hot dipped" Zn layers comprise Zn-Fe interlayers that can result in co-leaching of metallic Fe. This "overleaching" (meaning dissolving some metallic Fe from the scrap) can be done to variable extent depending on chemical and economic conditions:
A slight "overleaching" saves metallic Fe for further use (e.g. in steelmaking), a moderate "overleaching" can be reasonable or necessary for maximum Zn depletion (especially in case of galvanealed Zn layers), and a more thorough "overleaching" can be promising for maximizing output of Fe salt, especially if additional waste streams comprising Fe(III) can be converted into valuable products (e.g. 1 metallic Fe converts 2 Fe³⁺ from Jarosite or Goethite into 3 valuable Fe²⁺ species).

Preferably the leaching rate (or Zn removal rate) of metallic Zn is >90% or >98% or >99%, more preferably >99.5%; most preferably >99.8%.

Accepting some "overleaching" of Fe can also help for more efficient Zn removal in case of polymer, painting or lacquer on top of the Zn coated steel substrate.

Another embodiment is the dissolution of Fe(lll) compounds such as Fe oxides, Goethite or Jarosite in sulfuric acid or in the acidic solution comprising H⁺, Zn²⁺, and Fe³⁺. The Fe³⁺ is reduced to Fe²⁺ in the subsequent reaction with galvanized steel scrap.

Taking Zn from galvanized steel scrap as reducing agent for Fe³⁺ obtained after dissolution of EAFD saves the life for Fe as metal; Fe has more value as metal in scrap than as Fe²⁺.

Preferably, the reaction of the acidic solution with the galvanized steel scrap is continued until all or nearly all Zn has been dissolved (reaction A) and (subsequently) all Fe3+ has been reduced (reaction B):

Reaction A: Zn + 2 Fe³⁺ => Zn²⁺ + 2 Fe²⁺

Reaction B: 2 Fe³⁺ + Fe => 3 Fe²⁺

The leaching of metallic Zn can be done in a 2-step or multi-step process: Fresh galvanized steel scrap can be subjected to a first leaching step with an acidic solution obtained from previous leaching steps, or with a recycled solution from another process step, e.g. solution obtained from first step ZnS precipitation. And further leaching steps can follow using other solutions with higher acidity or higher Fe³⁺ concentration for improved leaching of the very last fraction of the metallic Zn. This can be done e.g. by dipping baskets with galvanized steel scrap into the corresponding solutions or by passing different leaching solutions one after another through a reactor filled with the scrap.

Partial recycling of solutions can help optimizing the acidity for leaching steps, adjusting Fe³⁺ level for optimized Zn leaching, increasing ion concentration for more efficient separation steps, or fine-tuning pH for ZnS precipitation. For example, the solution obtained after crystallization and separation of FeSO₄ * 7 H₂O can be used due to its acidity in the process step of manufacturing the acidic solution comprising Fe³⁺.

If required for the subsequent step of ZnS precipitation or solvent extraction of Zn²⁺, the pH can be raised. This can be achieved by supply of new Zn coated material (reaction C) or continuing leaching metallic Fe (overleaching; reaction D), or by alkaline materials (reaction E) or by reaction with new waste materials (reaction F):

Reaction C: Zn + H₂SO₄ => ZnSO₄ + H₂

Reaction D: Fe + H₂SO₄ => FeSO₄ + H₂

Reaction E: 2 NaOH + H₂SO₄ => Na₂SO₄ + H₂O

Reaction F: Fe₂O₃ + 3 H₂SO₄ => Fe₂(SO₄)₃ + 3H₂O

Reaction E is least favorable due to the generation of Na₂SO₄ that has to be separated or ends in a wastewater stream. Reaction C and D has the disadvantage of generating hydrogen, but the advantage of simply continuing the leaching step and no additional treatment step being necessary. Reaction C has the advantage over reaction D that no metallic Fe is lost.

The preferred option is reaction F. Raising the pH can be achieved by dissolution of iron oxide (e.g. from wastewater treatment after crystallization of FeSO₄ * 7 H₂O), dissolution of EAFD or other waste materials. In a preferred embodiment reaction F is not done after the reaction A or B, but after part of ZnS having been precipitated and separated. However, reaction F requires another treatment according to reaction A or B for reduction of Fe³⁺ to Fe²⁺.

Overall set-up of process parameters is heavily influenced by acid consumption for dissolving the waste materials for generation of the acidic solution. High acid ratio means better dissolution rates for Zn and Fe from waste materials, but also means more effort for maintaining acid balance for complete and selective precipitation of ZnS. Depending on relative volume of waste material and galvanized steel scrap, on Fe and Zn content of each material, on price for Zn and FeSO₄ * 7 H₂O, or on logistic or quality constraints, the process can be adjusted with a considerable amount of freedom.

Process control of the Zn leaching step can be done by monitoring redox potential. Complete dissolution of Zn and reduction of Fe3+ each is indicated by characteristic feature of redox potential (ref. US2015/0259766). It is possible to recycle any acidic solution from the inventive process partly back into a previous process step, e.g. the solution obtained after Zn leaching, the solution obtained after ZnS precipitation and separation, or the solution obtained after crystallization of FeSO₄ * 7 H₂O. This can help improving the acid balance of the inventive process. Preferably, the acid needed for generation of the acidic solution by dissolving a waste product can originate in part from recycling from a later process step.

Use of waste materials as source for Fe³⁺ can generate another source of revenue due to negative prices for some waste products (e.g. EAFD with low Zn content or Jarosite or Goethite). This applies especially for waste products with low zinc content with no satisfactory way for recycling existing for those materials.

### Zn-coated Fe covered by Fe3+-containing acidic solution

In line with the previous description of the acidic solution and the leaching step, the present disclosure also provides the product that is present at the beginning of the leaching step. The present disclosure thus also provides Zn-coated Fe that is covered by an acidic solution comprising 1.5 - 60 g, preferably 4 - 50 g, most preferably 10- 40 g Fe³⁺ per kg of solution. The Zn-coated Fe as well as the acidic solution are described in detail in the previous section.

### The galvanized steel scrap

Galvanized steel scrap consists of or comprises Fe substrate that is coated with a zinc layer. Fe substrates coated with zinc is often used for corrosion resisting products, e.g. in the automotive industry. Sometimes the protective layer is not pure zinc, but can contain other elements like Sn, Al, or Ni.

Galvanized steel scrap can be subjected to shredding or pressed into packages that are easy to handle, e.g. by dipping of a package into the leaching liquid (i.e. the acidic solution comprising Fe³⁺) and taking out again after the Zn leaching step. Another option is filling of a vessel or a column with the galvanized steel scrap and subjecting to the acidic solution in continuous or discontinuous manner. Another option is putting the galvanized steel scrap into a basket and immersing this basket in the leaching liquid., i.e. the acidic solution comprising Fe³⁺. Yet another option is shredding the galvanized steel scrap and conveying this material on a moving belt and passing an area of being sprayed by the acidic solution and a subsequent area of being sprayed by water.

After finishing the leaching of Zn, the metallic Fe substrate depleted from zinc can be washed with diluted acid and/or water for removing adhering solution comprising Zn and anions like sulfate or chloride.

The Fe substrate depleted from zinc can be used as a high-quality raw material for iron smelting processes, e.g., for steelmaking using electric arc furnace, for blast oxygen furnace, or for casting.

### The separation step

Separation of dissolved Zn²⁺ and Fe²⁺ can be made by precipitation of ZnS by bubbling H₂S into the solution.

A preferred option is:
- precipitation of the obtained Zn²⁺ in the solution as ZnS
- separating the ZnS from the solution comprising dissolved Fe²⁺
- crystallization of the Fe compound by evaporation of water and/or lowering temperature
- separation of the crystals of the Fe compound and recycling the obtained liquid phase back into one of the previous process steps

During precipitation of ZnS with H₂S the pH drops. In a preferred embodiment of the invention the precipitation of ZnS is done in (at least) a 2-step process. In a first step part of the Zn²⁺ is precipitated as ZnS using H₂S off-gas from second step or H₂S obtained from stripping the solution obtained after the second step precipitation and separation of ZnS. And in the second step a high concentration of H₂S is being used in order to shift the equilibrium towards ZnS precipitation. Another option is precipitation of ZnS using Na₂S or (NH₄)₂S.

A preferred embodiment is reacting the precipitated ZnS with H₂SO₄ resulting in a ZnSO₄ solution and gaseous H₂S and recycling the H₂S obtained for precipitation of ZnS again. Preferably the moist ZnS filtercake is reacted with diluted H₂SO₄. It can be necessary to strip residual H₂S by N₂ or air for shifting the equilibrium in the desired direction. Or reacting the H₂S with NH₄OH or NaOH for obtaining Na₂S or (NH₄)₂S.

However, ZnS can be the preferred material in case of transportation over a large distance to a zinc manufacturing location being necessary.

There are synergies for dissolving EAFD with H₂SO₄ and de-zincing of galvanized steel scrap in purification (e.g., Cu, Cd, Mn, Ni from Zn-Ni coatings) - if purification is done for creating higher value Zn²⁺ solution.

H₂S can be produced from H₂ and S or can be obtained as a by-product from production of coke. H₂S may also be obtained from spent absorbers for H₂S, e.g. EAFD as absorber for H₂S (Energy Fuels 2022, 36, 3695-3703).

There is wide industrial usage of metal oxides as H₂S removal adsorbents from industrial gases such as synthesis gas, coke gas from steel production, fuel cell hydrogen, sulfur recovery unit tail gas, and bio/natural gas. These materials can be used for H₂S generation and at the same time can be used as a source for Fe and/or Zn in manufacturing the acidic solution comprising Fe³⁺.

Another option for separation of dissolved Zn²⁺ and Fe²⁺ is solvent or membrane extraction. Preferably Zn²⁺ is transferred into an organic phase, most preferably D2EHPA, di-(2-ethyl hexyl) phosphoric acid. D2EHPA is a cheap and widely available reagent.

The process steps of Zn²⁺ extraction are:
D2EHPA is dissolved in an organic solvent, typically an inert hydrocarbon such as kerosene or naphtha. This organic phase is immiscible with the aqueous solution containing Zn²⁺. This D2EHPA-containing organic phase is brought into contact with the aqueous solution containing Zn²⁺:

Zn²⁺ (aq) + 2 D2EHPA (org) 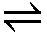

Zn(D2EHPA)2 (org)

The Zn(D2EHPA)2 complex is more soluble in the organic phase than in the aqueous phase. As a result, the complex transfers from the aqueous phase into the organic phase.

The loaded organic phase, comprising the extracted Zn(D2EHPA)2 complex, is then separated from the aqueous phase by settling, centrifugation, or decantation.

To recover the extracted zinc from the organic phase, H₂SO₄ is used as stripping agent. After stripping the zinc from the organic phase, the D2EHPA can be regenerated and reused in the extraction process.

Preferably the solvent extraction process involves multiple extraction and stripping stages to increase the overall efficiency of zinc recovery.

Preferably the pH of the solution to be treated by extraction is >0.5, more preferably >1.0, most preferably >1.5.

As Mn²⁺ is extracted together with Zn²⁺ there is a need for separating Mn. This can be done by cementation with fine Zn powder: Zn + Mn²⁺ => Zn²⁺ + Mn. Mn can be separated by sedimentation, filtration or centrifugation together with unreacted Zn. Another option is oxidation of Mn²⁺ to MnO₂. Preferably this can be done by O₂, O₃, H₂O₂, or H₂SO₅ with subsequent separation of MnO₂ by sedimentation, filtration or centrifugation.

### Production of Fe salt

The solution obtained after ZnS precipitation and separation of the precipitate or removal of Zn²⁺ by solvent or membrane extraction is used for reclamation of the Fe compound. Stripping of residual H₂S in the solution can be done by N₂. Crystallization is the preferred option for obtaining a solid Fe compound from solutions comprising FeSO₄. Preferably water is removed from the Fe²⁺ solution by vacuum evaporation and supplying heat in order to prevent temperature to drop down too quickly. A preferred option is to allow temperature to drop down to +5°C, and then separating the FeSO₄ * 7 H₂O crystals by filtration or centrifugation. The process of crystallization and separation of FeSO₄ * 7 H₂O from acidic solutions is state of the art in the TiO₂ production. Specific parameters depend on composition of solution. General principles and considerations can be found in DE 10 2007 032 418.

Preferably the FeSO₄ concentration in the solution is >100 g/l. Due to the large amount of crystal water being bound in FeSO₄ * 7 H₂O water is efficiently removed from the solution resulting in significant drop of pH. Final concentration of saturated solution at +5°C is ca. 35-40 g/l Fe²⁺.

Due to evaporation of water from the FeSO₄ solution and water capturing of the heptahydrate the acidity of the solution gets even significantly higher (pH<<0.5). Therefore, this solution or part of this solution can be used for closing the loop and recycling back into one of the previous steps: for reaction with EAFD or for Zn leaching from galvanized steel scrap.

A similar situation is found for the crystallization of FeCl₂ as FeCl₂ * 4 H₂O.

At least part of this solution leaves the process as waste water and a sink for some ions, e.g. Na or K. Preferably, Fe is precipitated by alkaline treatment, separated and recycled into one of the preceding steps, e.g. for generation of the acidic solution comprising Fe³⁺ or for raising the pH according to reaction F.

### Electrowinning

Careful precipitation of ZnS and washing the precipitate with diluted H₂SO₄ (pH ^{~}2) can achieve a nearly complete separation of Fe and other impurities. This ZnS can be fed into the primary Zn production process.

After conversion of ZnS into ZnSO₄ solution by reacting with H₂SO₄ the solution obtained can be used for electrowinning of metallic zinc; further purification by a cementation step with metallic zinc powder is possible for removing impurities even more, e.g., Ni, Cd, Cu, and Fe. As there are only small concentrations of these impurities present the demand for zinc powder is very low.

More details on cementation with further references can be found in: DEZINCING OF GALVANIZED STEEL by J. Grogan, Colorado Scholl of Mines: https://pdfcoffee.com/qdownload/dezincinc-of-galvanized-steel-pdf-pdf-free.html, p. 25.

In summary, the inventive process offers some striking advantages:
- no major waste streams from EAFD recycling
- Hydrometallurgic processes generally have less energy consumption and lower CO₂ footprint compared to thermal processes (e.g. Waelz process)
- Leaching step with max. efficiency for Zn depletion (implies some co-leaching of Fe)
- High flexibility
- Possibility for shifting the process towards more H₂ generation for further use
- Separation step: using H₂S for ZnS precipitation, if there is cheap H₂S available; or using solvent extraction, if there is no H₂S or no cheap H₂S available

The invention also provides the use of an acidic solution comprising Fe³⁺ for use as an oxidizing agent, preferably for de-zincing of galvanized steel, wherein the waste acidic solution is obtained by reacting is EAFD with sulfuric acid.

### Example 1: Recycling of electric arc furnace dust (EAFD) and de-zincing of galvanized steel scrap

An acidic solution is prepared by reacting electric arc furnace dust (EAFD) with concentrated sulfuric acid and dissolving the obtained reaction product in water. After separation of the solid residue an acidic solution comprising Fe³⁺ and Zn²⁺ is obtained.

Galvanized steel scrap is leached with this acidic solution until the Zn coating is dissolved to >99% and the Fe³⁺ is reduced to Fe²⁺. This can be made by dipping baskets filled with scrap into acidic solution or by passing acidic solution through a column filled with scrap. The obtained Zn-free metallic Fe substrate can be washed with water, dried and used as Fe resource for steelmaking or in foundries.

A typical mass ratio of EAFD and galvanized steel scrap is 1:8.

The solution obtained from the Zn leaching step comprising Zn²⁺ and Fe²⁺ is treated with H₂S gas for precipitating of ZnS. ZnS is separated by filtration or centrifugation and washed with diluted H₂SO₄ (pH ^{~}2) to remove FeSO₄. The ZnS can be used as raw material in primary zinc production or can be converted into a ZnSO₄ solution by dissolving in H₂SO₄ for electrowinning of zinc.

The FeSO₄ solution obtained after separation of the ZnS precipitate is taken for crystallization of FeSO₄ * 7 H₂O (copperas) by vacuum evaporation of water and allowing the system to cool down to 5°C. The FeSO₄ solution obtained after separation of the copperas can be recycled back (completely or in part) into one of the previous process steps.
Products obtained: Zn depleted scrap, ZnS (or ZnSO₄), and FeSO₄ * 7 H₂O (copperas)

### Example 2: Recycling of Jarosite and de-zincing of galvanized steel scrap

Jarosite is dissolved in diluted H₂SO₄ (preferably waste H₂SO₄ from TiO₂ production).

Galvanized steel scrap is leached with this acidic solution until the Zn coating is dissolved to >99% and the Fe³⁺ is reduced to Fe²⁺. This can be made by dipping baskets filled with scrap into acidic solution or by-passing acidic solution through a column filled with scrap. The obtained Zn-free metallic Fe substrate can be washed with water, dried and used as Fe resource for steelmaking or in foundries.

The solution obtained from the Zn leaching step comprising Zn²⁺ and Fe²⁺ is treated with H₂S gas for precipitating of ZnS. ZnS is separated by filtration or centrifugation and washed with diluted H₂SO₄ (pH ^{~}2) to remove FeSO₄. The ZnS can be used as raw material in primary zinc production or can be converted into a ZnSO₄ solution by dissolving in H₂SO₄ for electrowinning of zinc.

The FeSO₄ solution obtained after separation of the ZnS precipitate is taken for crystallization of FeSO₄ * 7 H₂O (copperas) by vacuum evaporation of water and allowing the system to cool down to 5°C. The FeSO₄ solution obtained after separation of the copperas can be recycled back (completely or in part) into one of the previous process steps.

Products obtained: Zn depleted scrap, ZnS (or ZnSO₄), FeSO₄ * 7 H₂O (copperas); whereby three low-cost waste materials are being recycled and converted into valuable products: Jarosite, waste diluted H₂SO₄, galvanized steel scrap.

### Example 3: Recycling of electric arc furnace dust (EAFD) and de-zincing of galvanized steel scrap

An acidic solution is prepared by reacting electric arc furnace dust (EAFD) with concentrated sulfuric acid and dissolving the obtained reaction product in water. After separation of the solid residue an acidic solution comprising Fe³⁺ and Zn²⁺ is obtained.

Galvanized steel scrap is leached with this acidic solution until the Zn coating is dissolved to >99% and the Fe³⁺ is reduced to Fe²⁺. This can be made by dipping pressed scrap elements or baskets filled with scrap into the acidic solution or by passing the acidic solution through a vessel filled with scrap. The obtained Zn-free metallic Fe substrate is being washed with water, dried and used as Fe resource for steelmaking or in foundries.

The solution obtained from the Zn leaching step comprising Zn²⁺ and Fe²⁺ is treated by solvent extraction with D2EHPA in kerosene. The loaded organic phase, comprising the extracted Zn(D2EHPA)2 complex, is then separated from the aqueous phase by settling. The organic phase is mixed with H₂SO₄ as stripping agent. After stripping the zinc from the organic phase the D2EHPA is reused for the extraction process.

Mn²⁺ is converted into MnO₂ by oxidation with O₃ and subsequently separated by filtration.

The FeSO₄ solution obtained after solvent extraction of Zn²⁺ is taken for crystallization of FeSO₄ * 7 H₂O (copperas) by vacuum evaporation of water and allowing the system to cool down to 5°C. The FeSO₄ solution obtained after separation of the crystalline copperas can be recycled back (completely or in part) into one of the previous process steps.
Products obtained: Zn depleted scrap, ZnSO₄, MnO₂, and FeSO₄ * 7 H₂O (copperas)

### Example 4: De-zincing of galvanized steel scrap

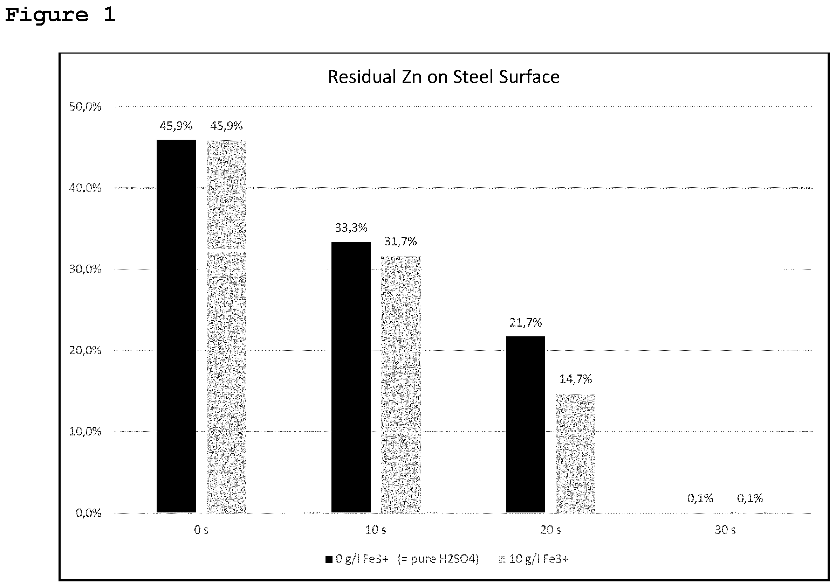

Galvanized steel scrap comprising 0.9% Zn is leached with
(a) an acidic solution comprising 150 g/l H₂SO₄
(b) an acidic solution comprising 150 g/l H₂SO₄ and 10 g/l Fe³⁺ (as Fe₂(SO₄)₃)
for 10, 20, and 30 s. After the leaching step the scrap samples are washed with deionized water and dried prior to XRF characterization. The results (in Fig. 1) with the bars indicating the surface Zn concentration as determined by XRF clearly reveal the acceleration of Zn dissolution in presence of Fe³⁺.

### Example 5: De-zincing of galvanized steel scrap

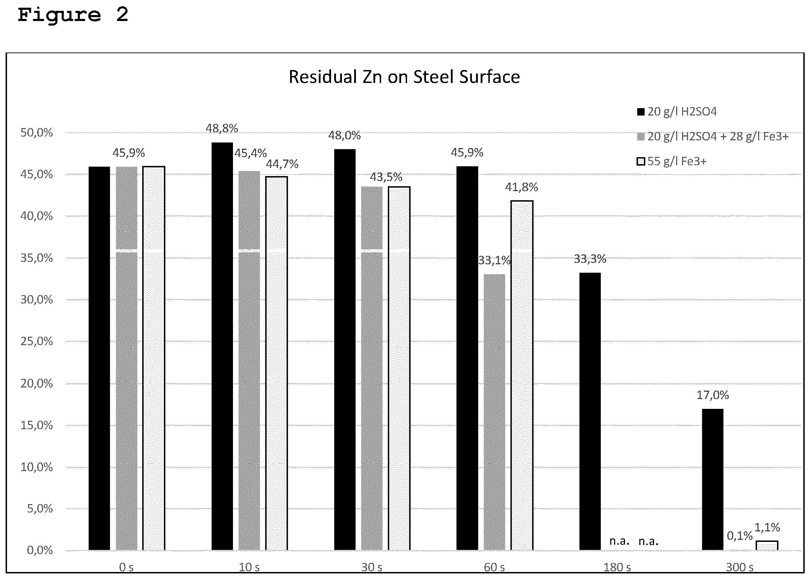

Galvanized steel scrap comprising 0.9% Zn is leached with
(a) an acidic solution comprising 20 g/l H₂SO₄
(b) an acidic solution comprising 20 g/l H₂SO₄ and 28 g/l Fe³⁺ (as Fe₂(SO₄)₃)
(c) a solution comprising 55 g/l Fe³⁺ (as Fe₂(SO₄)₃) (pH of solution < 4)
for up to 300 s. After the leaching step the scrap samples are washed with deionized water and dried prior to XRF characterization. The results (in Fig. 2) with the bars indicating the surface Zn concentration as determined by XRF clearly reveal the acceleration of Zn dissolution in presence of Fe³⁺.

After 300 s the residual Zn on the steel surface is 0.1% and 1.1% for solutions comprising Fe³⁺, and 17% for a H₂SO₄ solution without Fe³⁺.

## Claims

1. Process for depletion of zinc from Zn-coated Fe by
a) Subjecting the Zn-coated Fe to a leaching step in an acidic solution comprising Fe³⁺ to provide an acidic solution containing Zn²⁺ and Fe²⁺, wherein during leaching there is an excess of Fe³⁺ with respect to metallic Zn with an atomic ratio Fe³⁺/Zn⁰ >2 and/or wherein the acidic solution comprises Fe³⁺ in a concentration of 1.5 to 60 g Fe³⁺ per kg of solution at the initiation of the leaching step,
b) Obtaining a metallic Fe substrate depleted from zinc; and
c) Separating Fe²⁺ from Zn²⁺ to provide a Zn²⁺-containing product and a Fe²⁺ salt.

2. Process according to claim 1 **characterized in that** the acidic solution comprising Fe³⁺ is made from dissolution of electric arc furnace dust, Jarosite, millscale, or Goethite, or is made from waste H₂SO₄ from TiO₂ production using the sulfate process, acidic solutions from manufacturing of zinc, steel pickling solutions comprising FeCl₂ or FeSO₄, waste metal chlorides from TiO₂ chlorination of TiO₂ manufacturing using the chloride process, iron chloride solutions from production of synthetic rutile or any combinations of the waste products listed above.

3. Process according to claim 1 or 2 **characterized in that** the acidic solution comprises Zn²⁺.

4. Process according to any one of claims 1 to 3, **characterized in that** there is more than 1 leaching step, wherein at least 1 leaching step is done with a stoichiometric excess of metallic Zn in relation to Fe³⁺, and at least 1 leaching step is done with a stoichiometric excess of H⁺ and Fe³⁺ in relation to metallic Zn.

5. Process according to one or more of claims 1 - 4 **characterized in that** during leaching of step a) there is an excess of Fe³⁺ with respect to metallic Zn with an atomic ratio Fe³⁺/Zn⁰ >4, preferably >10.

6. Process according to one or more of claims 1 to 5, wherein the acid obtained after separating Fe²⁺ from Zn²⁺ is used to treat a waste material to produce an acid comprising Fe³⁺.

7. Process according to one or more of claims 1 to 6, comprising the steps of
i. Leaching a Zn containing waste material, preferably EAFD, with H₂SO₄
ii. separating the residue of undissolved material and obtaining an acidic solution comprising H⁺, Zn²⁺, and Fe³⁺
iii. using the obtained acidic solution for depletion of zinc from galvanized steel scrap or a composition comprising galvanized steel scrap
iv. obtaining the scrap depleted from zinc and a solution comprising ZnSO₄ and FeSO₄, and
v. separating Fe²⁺ from Zn²⁺ to provide a Zn²⁺-containing product and a Fe²⁺ salt.

8. Process according to one or more of claims 1 to 7 **characterized by** a leaching rate of metallic Zn from the Zn-coated Fe of >90%, preferably >98%; most preferably >99.5%.

9. Process according to one or more of claims 1 to 8 **characterized by** separating the obtained Zn²⁺ from the obtained Fe²⁺ by precipitation as ZnS.

10. Process according to one or more of claims 1 to 8 **characterized by** separating the obtained Zn²⁺ from the obtained Fe²⁺ by solvent extraction.

11. Process according to one or more of claims 1 to 9, comprising the following additional steps:
• precipitation of the obtained Zn²⁺ as ZnS
• separating the ZnS from the solution comprising dissolved Fe²⁺
• crystallization of the Fe compound by evaporation of water and/or lowering temperature
• separation of the crystals of the Fe compound and recycling the obtained liquid phase into one of the previous process steps.

12. Process according to claim 11 **characterized by** reacting the precipitated ZnS with H₂SO₄ resulting in ZnSO₄ and H₂S and recycling the H₂S obtained for precipitation of ZnS.

13. Process according to one or more of claims 1 to 12 **characterized by** taking Zn depleted scrap thus obtained as raw material for iron smelting processes, preferably in electric arc furnace, blast furnace, basic oxygen furnace, or for casting.

## Patentansprüche

1. Verfahren zum Entzinken von Zn-beschichtetem Fe durch
a) das Unterziehen des Zn-beschichteten Fe einem Auslaugschritt in einer sauren Lösung, umfassend Fe³⁺, um eine saure Lösung, enthaltend Zn²⁺ und Fe²⁺, zu erhalten, wobei während des Auslaugens ein Überschuss an Fe³⁺ im Verhältnis zu metallischem Zink mit einem Atomverhältnis Fe³⁺/Zn⁰>2 vorliegt und/oder wobei die saure Lösung zu Beginn des Auslaugschritts Fe³⁺ in einer Konzentration von 1,5 bis 60 g Fe³⁺ pro kg Lösung enthält,
b) das Erhalten eines metallischen Fe-Substrats, das entzinkt ist; und
c) das Abtrennen des Fe²⁺ von Zn²⁺, um ein Zn²⁺-haltiges Produkt und ein Fe²⁺-Salz zu erhalten.

2. Verfahren gemäß Anspruch 1, **dadurch gekennzeichnet, dass** die saure Lösung, umfassend Fe³⁺, durch Auflösen von Lichtbogenofenstaub, Jarosit, Walzzunder oder Goethit hergestellt wird oder aus H₂SO₄-Abfällen aus der TiO₂-Herstellung mittels des Sulfatverfahrens, sauren Lösungen aus der Zinkherstellung, Stahlbeizlösungen, die FeCl₂ oder FeSO₄ enthalten, Metallchloridabfällen aus der TiO₂-Chlorierung bei der TiO₂-Herstellung mittels des Chloridverfahrens, Eisenchloridlösungen aus der Herstellung von synthetischem Rutil oder beliebigen Kombinationen der oben aufgeführten Abfallprodukte hergestellt wird.

3. Verfahren gemäß Anspruch 1 oder 2, **dadurch gekennzeichnet, dass** die saure Lösung Zn²⁺ umfasst.

4. Verfahren gemäß einem der Ansprüche 1 bis 3, **dadurch gekennzeichnet, dass** mehr als 1 Auslaugschritt vorliegt, wobei mindestens 1 Auslaugschritt mit einem stöchiometrischen Überschuss an metallischem Zn im Verhältnis zu Fe³⁺ durchgeführt wird und mindestens 1 Auslaugschritt mit einem stöchiometrischen Überschuss an H⁺ und Fe³⁺ im Verhältnis zu metallischem Zn durchgeführt wird.

5. Verfahren gemäß einem oder mehreren der Ansprüche 1 - 4, **dadurch gekennzeichnet, dass** während des Auslaugschritts a) ein Überschuss an Fe³⁺ im Verhältnis zu metallischem Zn mit einem Atomverhältnis Fe³⁺/Zn⁰>4, bevorzugt >10, vorliegt.

6. Verfahren gemäß einem oder mehreren der Ansprüche 1 bis 5, wobei die nach dem Abtrennen des Fe²⁺ von Zn²⁺ erhaltene Säure zur Behandlung eines Abfallmaterials verwendet wird, um eine Säure, umfassend Fe³⁺, herzustellen.

7. Verfahren gemäß einem oder mehreren der Ansprüche 1 bis 6, umfassend die Schritte
i. das Auslaugen eines Zn-haltigen Abfallmaterials, bevorzugt EAFD, mit H₂SO₄
ii. das Abtrennen des Rückstands aus ungelöstem Material und das Erhalten einer sauren Lösung, umfassend H⁺, Zn²⁺ und Fe³⁺
iii. das Verwenden der erhaltenen sauren Lösung zum Entzinken von galvanisiertem Stahlschrott oder einer Zusammensetzung, umfassend galvanisierten Stahlschrott
iv. das Erhalten des entzinkten Schrotts und einer Lösung, umfassend ZnSO₄ und FeSO₄, und
v. das Abtrennen des Fe²⁺ von Zn²⁺, um ein Zn²⁺-haltiges Produkt und ein Fe²⁺-Salz zu erhalten.

8. Verfahren gemäß einem oder mehreren der Ansprüche 1 bis 7, **gekennzeichnet durch** eine Auslaugrate von metallischem Zn aus dem Zn-beschichteten Fe von >90%, bevorzugt >98%; am meisten bevorzugt >99,5%.

9. Verfahren gemäß einem oder mehreren der Ansprüche 1 bis 8, **gekennzeichnet durch** das Abtrennen des erhaltenen Zn²⁺ von dem erhaltenen Fe²⁺ durch Ausfällen als ZnS.

10. Verfahren gemäß einem oder mehreren der Ansprüche 1 bis 8, **gekennzeichnet durch** das Abtrennen des erhaltenen Zn²⁺ von dem erhaltenen Fe²⁺ durch Lösungsmittelextraktion.

11. Verfahren gemäß einem oder mehreren der Ansprüche 1 bis 9, umfassend die folgenden zusätzlichen Schritte:
• das Ausfällen des erhaltenen Zn²⁺ als ZnS
• das Abtrennen des ZnS von der Lösung, umfassend gelöstes Fe²⁺
• das Kristallisieren der Fe-Verbindung durch Verdampfen von Wasser und/oder Absenken der Temperatur
• das Abtrennen der Kristalle der Fe-Verbindung und das Rückführen der erhaltenen flüssigen Phase in einen der vorherigen Verfahrensschritte.

12. Verfahren gemäß Anspruch 11, **gekennzeichnet durch** das Umsetzen des ausgefällten ZnS mit H₂SO₄ zu ZnSO₄ und H₂S und das Rückführen des erhaltenen H₂S zum Ausfällen von ZnS.

13. Verfahren gemäß einem oder mehreren der Ansprüche 1 bis 12, **gekennzeichnet durch** das Verwenden des so erhaltenen entzinkten Schrotts als Rohmaterial für Eisenschmelzverfahren, bevorzugt in Lichtbogenöfen, Hochöfen, Sauerstoffblaskonvertern, oder zum Gießen.

## Revendications

1. Procédé d'appauvrissement en zinc de Fe revêtu de zinc par
a) le fait de soumettre le Fe revêtu de zinc à une étape de lixiviation dans une solution acide comprenant du Fe³⁺ pour fournir une solution acide contenant du Zn²⁺ et du Fe²⁺, dans lequel pendant la lixiviation il y a un excès de Fe³⁺ par rapport au Zn métallique avec un rapport atomique Fe³⁺/Zn⁰ > 2 et/ou dans lequel la solution acide comprend du Fe³⁺ selon une concentration allant de 1,5 à 60 g de Fe³⁺ par kg de solution à l'initiation de l'étape de lixiviation,
b) le fait d'obtenir un substrat métallique en Fe appauvri en zinc ; et
c) le fait de séparer le Fe²⁺ du Zn²⁺ pour fournir un produit contenant du Zn²⁺ et un sel de Fe²⁺.

2. Procédé selon la revendication 1 **caractérisé en ce que** la solution acide comprenant du Fe³⁺ est faite à partir de la dissolution de poussière de four à arc électrique (EAFD), de jarosite, de calamine de laminage ou de goethite, ou est faite à partir de H₂SO₄ déchet provenant de la production de TiO₂ en utilisant un des solutions acides de procédé au sulfate, provenant de la fabrication de zinc, des solutions de décapage d'acier comprenant des chlorures métalliques déchets de FeCl₂ ou de FeSO₄ provenant de la chloration du TiO₂ lors de la fabrication de TiO₂ en utilisant des solutions de chlorure de fer de procédé au chlorure, provenant de la production de rutile synthétique, ou toute combinaison des produits déchets listés ci-dessus.

3. Procédé selon la revendication 1 ou la revendication 2, **caractérisé en ce que** la solution acide comprend du Zn²⁺.

4. Procédé selon l'une quelconque des revendications 1 à 3, **caractérisé en ce qu'**il y a plus de 1 étape de lixiviation, dans lequel au moins 1 étape de lixiviation est accomplie avec un excès stœchiométrique de Zn métallique par rapport au Fe³⁺, et au moins 1 étape de lixiviation est accomplie avec un excès stœchiométrique de H⁺ et de Fe³⁺ par rapport au Zn métallique.

5. Procédé selon une ou plusieurs des revendications 1 à 4, **caractérisé en ce que**, pendant la lixiviation de l'étape a), il y a un excès de Fe³⁺ par rapport au Zn métallique, avec un rapport atomique Fe³⁺/Zn⁰ > 4, de préférence > 10.

6. Procédé selon une ou plusieurs des revendications 1 à 5, dans lequel l'acide obtenu après séparation du Fe²⁺ et du Zn²⁺ est utilisé pour traiter un matériau de déchet afin de produire un acide comprenant du Fe³⁺.

7. Procédé selon une ou plusieurs des revendications 1 à 6, comprenant les étapes suivantes :
i. le fait de lixivier un matériau déchet contenant du zinc, de préférence EAFD, avec du H₂SO₄
ii. le fait de séparer le résidu de matériau non dissous et d'obtenir une solution acide comprenant du H⁺, du Zn²⁺, et du Fe³⁺
iii. le fait d'utiliser la solution acide obtenue pour l'appauvrissement en zinc de déchets d'acier galvanisé ou d'une composition comprenant des déchets d'acier galvanisé
iv. le fait d'obtenir les déchets appauvris en zinc et une solution comprenant du ZnSO₄ et du FeSO₄, et
v. le fait de séparer le Fe²⁺ et le Zn²⁺ pour fournir un produit contenant du Zn²⁺ et un sel de Fe²⁺.

8. Procédé selon une ou plusieurs des revendications 1 à 7, **caractérisé par** un taux de lixiviation du Zn métallique à partir du Fe revêtu de zinc > 90 %, de préférence > 98 % ; de manière la plus préférée > 99,5 %.

9. Procédé selon une ou plusieurs des revendications 1 à 8, **caractérisé par** la séparation du Zn²⁺ et du Fe²⁺ obtenu par précipitation sous forme de ZnS.

10. Procédé selon une ou plusieurs des revendications 1 à 8, **caractérisé par** la séparation du Zn²⁺ obtenu et du Fe²⁺ obtenu par extraction par solvant.

11. Procédé selon une ou plusieurs des revendications 1 à 9, comprenant les étapes supplémentaires suivantes :
• précipitation du Zn²⁺ obtenu sous forme de ZnS
• séparation du ZnS de la solution comprenant du Fe²⁺ dissous
• cristallisation du composé de fer par évaporation de l'eau et/ou abaissement de la température
• séparation des cristaux du composé de fer et recyclage de la phase liquide obtenue dans l'une des étapes de procédé précédentes.

12. Procédé selon la revendication 11, **caractérisé par** le fait de faire réagir le ZnS précipité avec du H₂SO₄, résultant en du ZnSO₄ et du H₂S et le fait de recycler le H₂S obtenu pour la précipitation de ZnS.

13. Procédé selon une ou plusieurs des revendications 1 à 12, **caractérisé par** le fait de prendre les déchets appauvris en zinc ainsi obtenus en tant que matière première pour des procédés de fusion du fer, de préférence dans un four à arc électrique, un haut fourneau, un convertisseur à l'oxygène, ou pour une coulée.
